# EUROPEAN PATENT APPLICATION

(11) **EP 4 579 924 A1**
(43) Date of publication of application: **02.07.2025**
(21) Application number: 23919033.3
(22) Date of filing: 01.02.2023
(51) Int. Cl.: H01M 50/502

(54) **BATTERY CELL, BATTERY AND ELECTRIC DEVICE**

(71) Applicant: Contemporary Amperex Technology (Hong Kong) Limited, Central (HK)
(72) Inventor: SU, Huasheng, Ningde, Fujian 352100 (CN); XING, Chengyou, Ningde, Fujian 352100 (CN); LI, Quankun, Ningde, Fujian 352100 (CN); XU, Chunguang, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2023/074140
(87) International publication number: WO 2024/159455

(57) **Abstract**

A battery cell (20), a battery (100), and an electrical device are disclosed. The battery cell (20) includes: a shell (23), an electrode assembly (25), an electrode terminal (216), and a current collecting component (211). The shell (23) is configured to accommodate the electrode assembly (25). The electrode assembly (25) includes a tab (251). The electrode terminal (216) is disposed on the shell (23). The current collecting component (211) includes a tab connecting portion (2111) and a terminal connecting portion (2113). The tab connecting portion (2111) is configured to be connected to the tab (251). The terminal connecting portion (2113) is configured to be connected to the electrode terminal (216). The terminal connecting portion (2113) includes a plurality of terminal connecting sub-portions (21137) stacked in layers. Each terminal connecting sub-portion (21137) includes a riveting sub-portion (21151). Any two adjacent riveting sub-portions (21151) are fixed together by riveting.

## Description

### TECHNICAL FIELD

This application relates to the technical field of batteries, and in particular, to a battery cell, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

A current collecting component is a component configured to connect an electrode terminal and a tab of an electrode assembly in a battery. In order to reduce the space occupied by the current collecting component in a height direction in the battery, a terminal connecting portion of the current collecting component is usually designed as bendable. However, the terminal connecting portion of the existing current collecting component is typically a single-layer one-piece structure of limited bendability. In order to facilitate bending, the thickness of the terminal connecting portion needs to avoid being excessively thick, thereby resulting in a relatively small flow area of the current collecting component, a relatively large internal resistance, and a relatively large temperature rise, and in turn, impairing the safety of the battery.

### SUMMARY

In view of the above problem, this application provides a battery cell, a battery, and an electrical device to alleviate the problem that the safety of the battery is impaired by a small flow area, a large internal resistance, and a large temperature rise of a current collecting component.

According to a first aspect, this application provides a battery cell. The battery cell includes an electrode assembly, a shell, an electrode terminal, and a current collecting component. The electrode assembly includes a tab. The shell is configured to accommodate the electrode assembly The electrode terminal is disposed on the shell. The current collecting component includes a tab connecting portion and a terminal connecting portion. The tab connecting portion is configured to be connected to the tab. The terminal connecting portion is configured to connect the electrode terminal and the tab connecting portion together. The terminal connecting portion includes a plurality of terminal connecting sub-portions stacked in layers. Each terminal connecting sub-portion includes a riveting sub-portion. Any two adjacent riveting sub-portions are fixed together by riveting.

In the technical solution of this embodiment of this application, the terminal connecting portion of the current collecting component is designed as a plurality of terminal connecting sub-portions stacked in layers. In contrast to the current collecting component of a single-layer one-piece structure, the bonding force between different layers of terminal connecting sub-portions is relatively small, and deformation is more tolerable between layers in a case of bending. In this way, the bendability of the plurality of terminal connecting sub-portions is higher. With the same bendability, the aggregate thickness of the plurality of terminal connecting sub-portions (that is, the thickness of the terminal connecting portion) can be made larger. The flow area is increased, the internal resistance is reduced, the temperature rise is reduced, and therefore, the safety of the battery is improved. In addition, bending the plurality of terminal connecting sub-portions to a greater extent can also reduce the space occupied by the current collecting component in the height direction, increase the energy density of the battery cell, and in turn, increase the energy density of the battery. In addition, any two adjacent terminal connecting sub-portions are fixed together by riveting by two adjacent riveting sub-portions, thereby implementing a rivet connection. In contrast to a practice in which the terminal connecting portion is formed by welding all the terminal connecting sub-portions together, the rivet connection improves the positioning precision during connection of the terminal connecting portion, and avoids the welding process, thereby improving the production efficiency of the current collecting component.

In some embodiments, any two adjacent riveting sub-portions are welded to each other. To be specific, each riveting position between the terminal connecting sub-portions is reinforced by welding. On the one hand, the welding reinforcement increases the connection strength between the terminal connecting sub-portions. On the other hand, the welding reinforcement increases the flow area of the current collecting component, reduces the internal resistance, reduces the temperature rise, and improves the safety performance of the battery cell.

In some embodiments, the terminal connecting portion is provided with a fixing structure. In the fixing structure, all the riveting sub-portions are stacked in sequence and mated to each other.

In contrast to a practice in which a plurality of single-layer terminal connecting sub-portions are punched out and then stacked up and welded together to form a terminal connecting portion, in these embodiments of this application, the riveting sub-portions of the terminal connecting sub-portions on adjacent layers are stacked to form a fixing structure, so as to be positioned accurately and easy to align. In addition, no welding process is required, thereby improving the production efficiency of the current collecting component. In contrast to a practice in which a multilayered terminal connecting portion is obtained by rolling a material into a plurality of layers and then cutting the rolled layers, in these embodiments of this application, the riveting of the riveting sub-portions of the terminal connecting sub-portions on adjacent layers can reduce burrs.

In some embodiments, the fixing structure is disposed at an end region, close to the electrode terminal, of the terminal connecting portion. In this way, all the terminal connecting sub-portions can be riveted together to form a one-piece terminal connecting portion.

In some embodiments, the fixing structure is disposed at an end region, close to the tab connecting portion, of the terminal connecting portion. In this way, after all the terminal connecting sub-portions are riveted together to form a one-piece terminal connecting portion, the one-piece terminal connecting portion can be conveniently riveted to the tab connecting portion.

In some embodiments, the fixing structure is disposed at an end region, close to the electrode terminal, of the terminal connecting portion, and at an end region, close to the tab connecting portion, of the terminal connecting portion. In this way, on the one hand, all the terminal connecting sub-portions can be riveted together to form a one-piece terminal connecting portion. On the other hand, after all the terminal connecting sub-portions are riveted together to form a one-piece terminal connecting portion, the one-piece terminal connecting portion can be conveniently riveted to the tab connecting portion. Moreover, a fixing structure is disposed on both opposite ends of the terminal connecting portion, so that the bonding force of the two ends of the one-piece terminal connecting portion is relatively uniform, and the bonding is firmer on the whole.

In some embodiments, the number of the fixing structures is one or more. When the number of the fixing structures is one, a high positioning precision is ensured during riveting of the terminal connecting sub-portions on any adjacent layers. When the number of the fixing structures is plural, the plurality of fixing structures not only ensures a high positioning precision during riveting of the terminal connecting sub-portions on any adjacent layers, but also improves the connection strength between the terminal connecting sub-portions, thereby preventing easy detachment from each other, and improving the operating stability of the current collecting component.

In some embodiments, a cross-sectional shape of the fixing structure is any one of, but is not limited to, a square, a rectangle, or a circle. The cross-sectional shape of the fixing structure is not limited, and may be any one of a square, a rectangle, or a circle, thereby reducing the design difficulty of the terminal connecting portion, and simplifying the manufacture of the current collecting component.

In some embodiments, the terminal connecting portion includes a first main surface and a second main surface arranged opposite to each other along a thickness direction of the terminal connecting portion after being spread out. The fixing structure forms a recessed portion on a side at which the first main surface is located, and the fixing structure forms a first protruding portion on the second main surface. The fixing structure includes a first protruding portion and a recessed portion, so that misalignment between layers can be avoided during stacking when the terminal connecting portion is formed by riveting, so as to implement accurate positioning and easy alignment. In addition, no welding process is required, thereby improving the production efficiency of the current collecting component. In addition, the fixing structure includes a first protruding portion and a recessed portion, thereby reducing burrs.

In some embodiments, the tab connecting portion is disposed on one side, close to the second main surface, of the terminal connecting portion. The tab connecting portion is provided with a first accommodation portion, and the first protruding portion is accommodated in the first accommodation portion. The first protruding portion is accommodated in the first accommodation portion, and can play a positioning role when the terminal connecting portion is connected to the tab connecting portion.

In some embodiments, the terminal connecting portion is fixedly connected to the tab connecting portion by the first protruding portion. The first protruding portion is fixedly connected to the first accommodation portion, so that the terminal connecting portion is fixedly connected to the tab connecting portion by the first protruding portion. In contrast to a practice in which the terminal connecting portion is connected to the tab connecting portion by welding, the design in this application improves the positioning precision when the terminal connecting portion is connected to the tab connecting portion, and avoids the welding process, thereby improving the production efficiency of the current collecting component.

In some embodiments, each riveting sub-portion includes a sub-protrusion and a sub-recess. Each sub-protrusion protrudes toward the second main surface. Each sub-recess is recessed from the first main surface toward the second main surface. The sub-protrusion of one riveting sub-portion among two adjacent riveting sub-portions is accommodated in and fixedly connected to the sub-recess of the other riveting sub-portion.

In contrast to a practice in which a plurality of single-layer terminal connecting sub-portions are punched out and then stacked up and welded together to form a terminal connecting portion, in these embodiments of this application, the sub-protrusion of one of two adjacent terminal connecting sub-portions is riveted to the sub-recess of the other terminal connecting sub-portion, thereby avoiding misalignment between layers during stacking, implementing accurate positioning and easy alignment. In addition, no welding process is required, thereby improving the production efficiency of the current collecting component. In contrast to a practice in which a multilayered terminal connecting portion is obtained by rolling a material into a plurality of layers and then cutting the rolled layers, the riveting between the sub-protrusion of one of two adjacent terminal connecting sub-portions and the sub-recess of the other terminal connecting sub-portion can reduce burrs.

In some embodiments, the terminal connecting portion is provided with a second accommodation portion, and the tab connecting portion is provided with a second protruding portion. The second protruding portion is accommodated in the second accommodation portion. The second protruding portion is accommodated in the second accommodation portion, thereby improving the positioning accuracy when the terminal connecting portion is connected to the tab connecting portion.

In some embodiments, the tab connecting portion is fixedly connected to the terminal connecting portion by the second protruding portion. The second protruding portion is fixedly connected to the second accommodation portion, so that the tab connecting portion is fixedly connected to the terminal connecting portion by the second protruding portion. In contrast to a practice in which the tab connecting portion is connected to the terminal connecting portion by welding, the design in this application improves the positioning precision when the tab connecting portion is connected to the terminal connecting portion, and avoids the welding process, thereby improving the production efficiency of the current collecting component.

In some embodiments, the terminal connecting portion and the tab connecting portion are at least partially welded together. That is, welding is implemented between the terminal connecting portion and the tab connecting portion for reinforcement. On the one hand, the welding increases the flow area of the current collecting component, reduces the internal resistance, reduces the temperature rise, and improves the safety performance of the battery cell. On the other hand, the welding makes the connection firmer between the terminal connecting portion and the tab connecting portion, thereby preventing easy detachment between the two portions, and improving the operating stability of the current collecting component.

In some embodiments, a weld mark formed between the terminal connecting portion and the tab connecting portion is located in a region outside the fixing structure. The weld mark formed between the terminal connecting portion and the tab connecting portion is located in a region outside the fixing structure, thereby increasing the flow area of the current collecting component on the one hand, reducing the internal resistance, reducing the temperature rise, and improving the safety performance of the battery cell. On the other hand, without destroying the riveting, the positioning of the weld mark makes the connection firmer between the terminal connecting portion and the tab connecting portion, and prevents easy detachment between the two portions, thereby improving the operating stability of the current collecting component.

In some embodiments, the terminal connecting portion is disposed between the tab connecting portion and the electrode terminal in a bent manner. The terminal connecting portion is disposed between the tab connecting portion and the electrode terminal in a bent manner, thereby reducing the space occupied by the current collecting component in the height direction in the battery cell. On the one hand, this arrangement makes the structure of the battery cell more compact. On the other hand, with the same height of the battery cell, more space can be freed for the electrode assembly, thereby increasing the energy density of the battery cell.

According to a second aspect, this application provides a battery. The battery includes the battery cell disclosed in any one of the above embodiments.

In the technical solution of an embodiment of this application, the battery employs the battery cell according to an embodiment of the first aspect. In the battery cell, the terminal connecting sub-portions stacked in layers of the current collecting component are more bendable and not easily breakable, thereby ensuring the operating stability of the battery. In addition, with the same bendability, the aggregate thickness of the plurality of terminal connecting sub-portions can be made larger, thereby increasing the flow area, reducing the internal resistance, and reducing the temperature rise, and in turn, improving the safety of the battery. In addition, bending the plurality of terminal connecting sub-portions to a greater extent can also reduce the space occupied by the current collecting component in the height direction, increase the energy density of the battery cell, and in turn, increase the energy density of the battery.

According to a third aspect, this application provides an electrical device. The electrical device includes the battery disclosed in any one of the above embodiments. The battery is configured to provide electrical energy.

In the technical solutions of embodiments of this application, the electrical device employs the battery disclosed in the second aspect according to an embodiment of this application. In a battery cell of the battery, the terminal connecting sub-portions stacked in layers of the current collecting component are more bendable and not easily breakable, thereby ensuring the operating stability of the electrical device. In addition, with the same bendability, the aggregate thickness of the plurality of terminal connecting sub-portions can be made larger, thereby increasing the flow area, reducing the internal resistance, reducing the temperature rise, and in turn, improving the safety of the battery. In addition, bending the plurality of terminal connecting sub-portions to a greater extent can also reduce the space occupied by the current collecting component in the height direction, increase the energy density of the battery cell, and in turn, increase the energy density of the battery, and improve the runtime of the electrical device.

The above description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to some embodiments of this application;
FIG. 2 is a schematic exploded view of a battery according to some embodiments of this application;
FIG. 3 is a three-dimensional schematic structural diagram of a battery cell according to some embodiments of this application;
FIG. 4 is a three-dimensional schematic structural diagram of a top cap assembly according to some embodiments of this application;
FIG. 5 is a schematic exploded view of a top cap assembly according to some embodiments of this application;
FIG. 6 is a planar schematic structural diagram of a top cap assembly according to some embodiments of this application;
FIG. 7 is a cross-sectional schematic view of the top cap assembly shown in FIG. 6 and sectioned along a VII-VII line;
FIG. 8 is a cross-sectional schematic view of the top cap assembly shown in FIG. 6 and sectioned along a VIII-VIII line;
FIG. 9 is a three-dimensional schematic structural diagram of a current collecting component according to some embodiments of this application;
FIG. 10 is a schematic exploded view of a current collecting component according to some embodiments of this application;
FIG. 11 is a three-dimensional schematic structural diagram of a terminal connecting portion in a current collecting component according to some embodiments of this application;
FIG. 12 is a planar schematic structural diagram of a current collecting component according to some embodiments of this application;
FIG. 13 is a cross-sectional schematic view of the current collecting component shown in FIG. 12 and sectioned along an XIII-XIII line;
FIG. 14 is a planar schematic structural diagram of a current collecting component according to some embodiments of this application;
FIG. 15 is a cross-sectional schematic view of the current collecting component shown in FIG. 14 and sectioned along an XV-XV line; and
FIG. 16 is a three-dimensional schematic structural diagram of a current collecting component according to some embodiments of this application.

List of reference numerals:
vehicle 1000;
battery 100, controller 200, motor 300;
box 10, first part 11, second part 12;
battery cell 20, top cap assembly 21, current collecting component 211, tab connecting portion 2111, connection region 21111, weld region 21113, terminal connecting portion2113, first connecting section 21131, second connecting section 21133, bent section 21135, fixing structure 2115, riveting sub-portion 21151, first accommodation portion 2117, second accommodation portion 2118, accommodation sub-portion 21181, second protruding portion 2119, terminal connecting sub-portion 21137, top cap sheet 212, first insulation piece 213, second insulation piece 214, connecting piece 215, electrode terminal 216, sealing element 217; shell 23; electrode assembly 25.

### DETAILED DESCRIPTION

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the expansion of the application fields of the power batteries.

The inventor hereof has noticed that in a typical battery currently, a tab of an electrode assembly is flattened, a current collecting component and the tab are welded together, and the current collecting component is bent and electrically connected to an electrode terminal to output electrical current. This places a high requirement on the flow capacity of the current collecting component. However, in order to facilitate bending and process welding (welding between the current collecting component and the tab of the electrode assembly), a terminal connecting portion of the current collecting component needs to avoid being excessively thick. Therefore, the flow area S of the terminal connecting portion is very small. In addition, the bending process requires the terminal connecting portion to be bent three times. Consequently, the length L of the terminal connecting portion is relatively large, the internal resistance of the terminal connecting portion is increased as can be deduced from the resistance calculation formula R = ρ × L/S, and the requirements on the flow capacity and the internal resistance of power-type batteries fail to be met.

To alleviate the problem that the safety of the battery is impaired by a relatively small flow area, a relatively large internal resistance, and a relatively large temperature rise of the current collecting component, the inventor hereof has found through research that the terminal connecting portion of the current collecting component can be designed as a plurality of terminal connecting sub-portions stacked in layers. In contrast to the current collecting component of a single-layer one-piece structure, the bonding force between different layers of terminal connecting sub-portions is relatively small, and deformation is more tolerable between layers in a case of bending. In this way, the bendability of the plurality of terminal connecting sub-portions is higher. With the same bendability, the overall thickness of the multilayered terminal connecting portion can be made larger. The flow area of the current collecting component is increased, the internal resistance is reduced, the temperature rise is reduced, and therefore, the safety of the battery is improved.

In view of the above factors, in order to design the terminal connecting portion of the current collecting component into a plurality of terminal connecting sub-portions stacked in layers, the inventor hereof also finds that: the multilayered terminal connecting portion obtained by stacking a material in a plurality of layers and then cutting the stacked layers gives rise to a large number of edge burrs, and, if a plurality of single-layer terminal connecting sub-portions are punched out and then stacked up and welded to obtain a multilayered terminal connecting portion, the sub-portions are unable to be well aligned, and the welding efficiency is relatively low. Neither of the production methods can implement mass production. After in-depth research, the inventor hereof has designed a current collecting component for use in a battery cell. The terminal connecting portion of the current collecting component is designed as a plurality of terminal connecting sub-portions stacked in layers. The terminal connecting sub-portions on any two adjacent layers are riveted to each other, thereby avoiding generation of burrs, achieving a high positioning precision, and enabling easy alignment. In addition, no welding process is involved, thereby improving the production efficiency of the terminal connecting portion and facilitating mass production.

The battery cell disclosed in an embodiment of this application is applicable to an electrical device that uses a battery as a power supply and is applicable to various energy storage systems that use a battery as an energy storage unit. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

For ease of description in the following embodiments, a vehicle 1000 is used as an example of the electrical device according to an embodiment of this application.

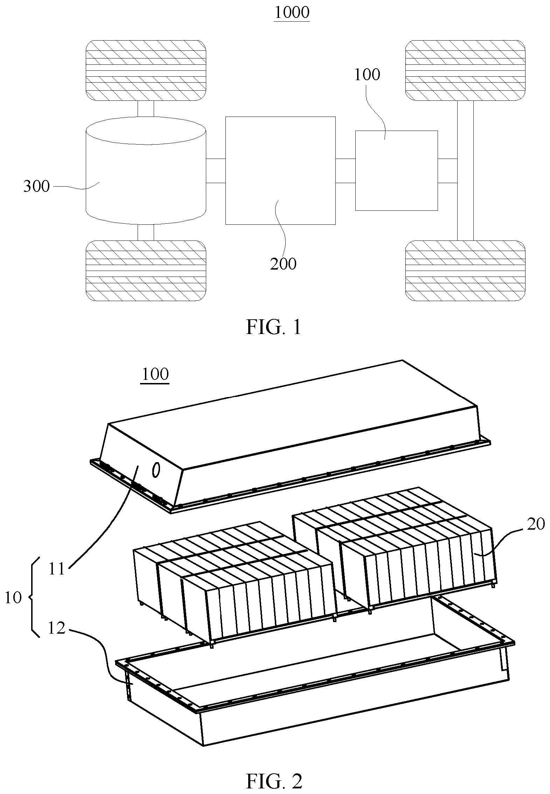

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes. The battery cell 20 is a minimum unit of a battery 100. This application is described by using an example in which the battery cell 20 is a cylindrical cell.

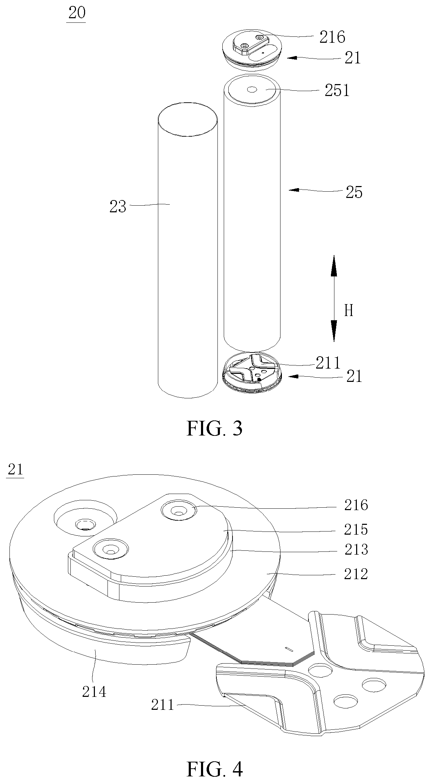

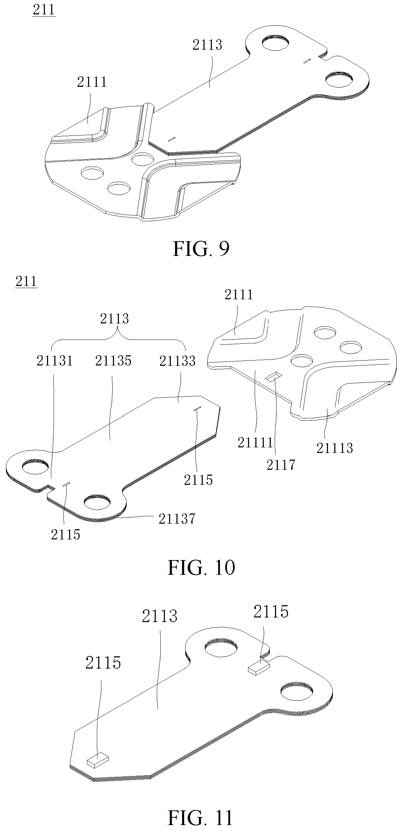

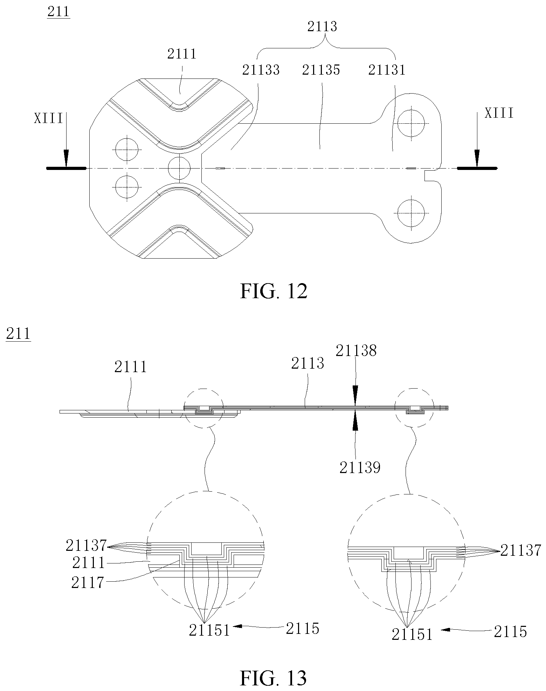

Referring to FIG. 3, which shows a battery cell 20 according to some embodiments of this application, the battery cell 20 includes: a shell 23, an electrode assembly 25, an electrode terminal 216, and a current collecting component 211. The shell 23 is configured to accommodate the electrode assembly 25. The electrode assembly 25 includes a tab 251. The electrode terminal 216 is disposed on the shell 23. Referring to FIG. 9 and FIG. 10, the current collecting component 211 includes a tab connecting portion 2111 and a terminal connecting portion 2113. The tab connecting portion 2111 is configured to be connected to the tab 251. The terminal connecting portion 2113 is configured to connect the electrode terminal 216 and the tab connecting portion 2111. Referring to FIG. 13, the terminal connecting portion 2113 includes a plurality of terminal connecting sub-portions 21137 stacked in layers. Each terminal connecting sub-portion 21137 includes a riveting sub-portion 21151. Any two adjacent riveting sub-portions 21151 are fixed together by riveting.

The shell 23 may be a cylindrical structure. An accommodation cavity is formed inside the shell 23, and is configured to accommodate the electrode assembly 25 and an electrolyte solution. The shell 23 is provided with openings at both ends so that the electrode assembly 25 can be placed into the accommodation cavity of the shell 23 through the openings. The shell 23 may be made of a metal material such as aluminum or aluminum alloy, or may be made of an insulation material such as plastic or rubber.

The electrode assembly 25 includes an electrode plate unit and a tab 251 extending from at least one end surface. Specifically, along the height direction (H) of the battery cell 20, the electrode plate unit includes two end surfaces disposed opposite to each other. In the battery cell 20, tabs 251 are extended out from the two end surfaces of the electrode plate unit respectively, and are a positive tab and a negative tab respectively. The electrode plate unit includes a negative electrode plate, a positive electrode plate, and a separator. The separator is located between a negative electrode plate and a positive electrode plate that are adjacent to each other, and is configured to separate the negative electrode plate from the positive electrode plate.

In a possible design, the negative electrode plate, the separator, and the positive electrode plate are sequentially stacked and wound to form an electrode plate unit of the electrode assembly 25. That is, the electrode plate unit is a jelly-roll structure. In addition, a gap exists on the formed electrode plate unit, and an electrolyte solution can enter the electrode plate unit through the gap to infiltrate the negative electrode plate and the positive electrode plate.

The negative electrode plate includes a negative current collector (such as a copper foil) and a negative active material layer (such as a carbon or silicon). The positive electrode plate includes a positive current collector (such as an aluminum foil) and a positive active material layer (such as a ternary material, lithium iron phosphate, or lithium cobalt oxide) applied on a surface of the positive current collector. The negative tab is connected to the negative electrode plate, and extends out from the electrode plate unit. The negative tab may be formed directly by cutting the negative current collector. The positive tab is connected to the positive electrode plate, and extends out from the electrode plate unit. The positive tab can be formed directly by cutting the positive current collector.

The electrode terminal 216 is a functional component that can be configured to conduct the current in the electrode assembly 25 to the outside of the battery 100 so as to output or input the electrical energy of the battery cell 20. The electrode terminal 216 includes a positive electrode terminal and a negative electrode terminal. The positive electrode terminal and the negative electrode terminal are located at the two ends of the electrode plate unit respectively. One end of each electrode terminal 216 extends into the interior of the battery cell 20. The end surface of the other end of the electrode terminal is exposed outside the battery cell 20 and can be connected to an external electrical connecting piece.

The current collecting component 211 is a component configured to cover and seal the opening of the battery cell 20, be connected to the tab 251 of the electrode assembly 25 inside the opening, and be connected to the electrode terminal 216 of the battery cell 20. The current collecting component 211 needs to be made of a conductive metal material, so as to ensure that the current collecting component can serve as a good conductor between the tab 251 and the electrode terminal 216 after being connected to the tab 251 and the electrode terminal 216. The current collecting component 211 according to an embodiment of this application is applicable to cylindrical cells 20 and battery cells 20 of other shapes such as a cuboidal shape.

Referring to FIG. 3, FIG. 9, and FIG. 10, the tab connecting portion 2111 is a part of the current collecting component 211, where the part seals and covers the opening of the shell 23 of the battery cell 20. The tab connecting portion 2111 may be in a shape that fits the shape of the opening of the shell 23 of the battery cell 20, for example, a quasi-circular shape. In addition, the tab connecting portion 2111 is further configured to be welded to the tab 251 of the electrode assembly 25. A weld region 21113 of the tab connecting portion 2111 is a region configured to weld the tab 251 of the electrode assembly 25. A suitable area and position of the weld region may be set according to the need of welding the tab 251. The connection region 21111 of the tab connecting portion 2111 is a region configured to be connected to the terminal connecting portion 2113. The connection region 21111 of the tab connecting portion 2111 is disposed at a position that avoids interference with the welding between the tab 251 and the tab connecting portion 2111. In other words, the connection region 21111 of the tab connecting portion 2111 is disposed in a region other than the weld region 21113 on the tab connecting portion 2111. The connection region 21111 may occupy a part of the region other than the weld region 21113 on the tab connecting portion 2111, for example, occupy the left region or right region other than the weld region 21113 on the tab connecting portion 2111. Alternatively, the connection region 21111 may occupy the entire region other than the weld region 21113 on the tab connecting portion 2111, for example, occupy both the left region and the right region other than the weld region 21113 on the tab connecting portion 2111. In addition, the current collecting component 211 according to an embodiment of this application does not limit the shapes of the weld region 21113 and the connection region 21111 of the tab connecting portion 2111.

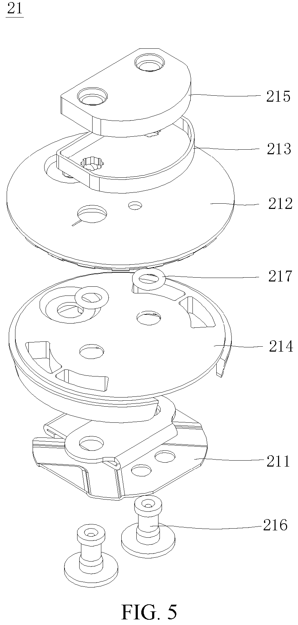

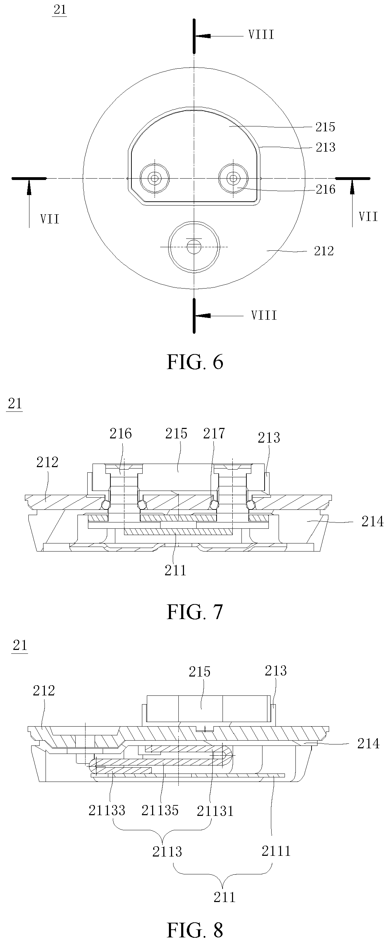

Still referring to FIG. 5, FIG. 9, and FIG. 10, the terminal connecting portion 2113 is a component located on the current collecting component 211 and configured to be connected to the electrode terminal 216. The terminal connecting portion 2113 is connected to the connection region 21111 to ensure that the current collecting component 211 is used as a component for conducting current. The material of the terminal connecting portion 2113 and the material of the tab connecting portion 2111 may be the same conductive metal material, or may be different conductive metal materials, as long as it is ensured that the current collecting component 211 can serve as a good conductor between the tab 251 and the electrode terminal 216 after being connected to the tab 251 and the electrode terminal 216 separately. The length of the terminal connecting portion 2113 is greater than the length of the tab connecting portion 2111. Specifically, referring to FIG. 8, the terminal connecting portion 2113 includes a first connecting section 21131, a second connecting section 21133, and a bent section 21135 located between the first connecting section 21131 and the second connecting section 21133. The first connecting section 21131 and the second connecting section 21133 are located at two opposite ends of the terminal connecting portion 2113 along a length direction of the terminal connecting portion that is spread out. The first connecting section 21131 is configured to be connected to the electrode terminal 216. The second connecting section 21133 is configured to be connected to the tab connecting portion 2111, and is located in the connection region 21111. The bent section 21135 is a region located between and configured to connect the first connecting section 21131 and the second connecting section 21133 on the terminal connecting portion 2113, and is of relatively high bendability. The bent section 21135 may be bent at a position of connection to the first connecting section 21131, or, the bent section 21135 may be bent at a position of connection to the second connecting section 21133, so that the bent current collecting component 211 is Z-shaped.

The terminal connecting portion 2113 includes a plurality of terminal connecting sub-portions 21137 stacked in layers. The terminal connecting sub-portion 21137 on each layer is the same, so that the terminal connecting sub-portions can be conveniently molded in batches by the same process. The plurality of terminal connecting sub-portions 21137 are stacked in layers. The plurality of layers are fixed together by a bonding process to form a whole terminal connecting portion 2113. Specifically, referring to FIG. 13, each terminal connecting sub-portion 21137 includes a riveting sub-portion 21151. Any two adjacent riveting sub-portions 21151 are fixed together by riveting.

Riveting is a process or method of connecting two parts to be connected, by which holes are drilled on the two parts, rivets are inserted in the holes, and then the two parts are riveted together by using a rivet gun. However, with respect to the rivet connection between any two adjacent terminal connecting sub-portions 21137 in this application, the riveting in this application is implemented without using a rivet. Instead, any two adjacent terminal connecting sub-portions 21137 are directly riveted to each other permanently, so as to implement connection between the terminal connecting sub-portions 21137.

In the technical solution of this embodiment of this application, the terminal connecting portion 2113 of the current collecting component 211 is designed as a plurality of terminal connecting sub-portions 21137 stacked in layers. In contrast to the current collecting component of a single-layer one-piece structure, the bonding force between different layers of terminal connecting sub-portions 21137 is relatively small, and deformation is more tolerable between layers in a case of bending. In this way, the bendability of the plurality of terminal connecting sub-portions 21137 is higher. With the same bendability, the aggregate thickness of the plurality of terminal connecting sub-portions 21137 (that is, the thickness of the terminal connecting portion 2113) can be made larger. The flow area is increased, the internal resistance is reduced, the temperature rise is reduced, and therefore, the safety of the battery 100 (shown in FIG. 2) is improved. In addition, bending the plurality of terminal connecting sub-portions 21137 to a greater extent can also reduce the space occupied by the current collecting component 211 in the height direction, increase the energy density of the battery cell 20, and in turn, increase the energy density of the battery 100. In addition, any two adjacent terminal connecting sub-portions 21137 are fixed together by riveting by two adjacent riveting sub-portions 21151, thereby implementing a rivet connection. In contrast to a practice in which the terminal connecting portion is formed by welding all the terminal connecting sub-portions together, the rivet connection improves the positioning precision during connection of the terminal connecting portion 2113, and avoids the welding process, thereby improving the production efficiency of the current collecting component 211.

According to some embodiments of this application, optionally, referring to FIG. 3, the battery cell 20 further includes a top cap assembly 21. The electrode assembly 25 is accommodated in the shell 23. A positive tab and a negative tab are disposed on the two opposite ends of the electrode assembly 25 respectively. The top cap assembly 21 fits and covers the openings at both ends of the shell 23. Both the positive tab and the negative tab are connected to the tab connecting portion 2111 (shown in FIG. 9) of the current collecting component 211 in the top cap assembly 21.

The top cap assembly 21 is a component that fits and covers the opening of the shell 23 of the battery cell 20 and that provides a hermetically closed space for the electrode assembly 25, electrolyte solution, and the like located inside the shell 23. The electrical energy of the electrode assembly 25 is led out to the outside by the electrode terminal 216 of the top cap assembly 21.

With the top cap assembly 21 disposed on both opposite ends of the battery cell 20, the plurality of terminal connecting sub-portions 21137 are more bendable. With the same bendability, the aggregate thickness of the plurality of terminal connecting sub-portions 21137 can be made larger, thereby increasing the flow area of the current collecting component 211, reducing the internal resistance, and reducing the temperature rise, and in turn, improving the safety of the battery 100 (shown in FIG. 2). In addition, bending the plurality of terminal connecting sub-portions 21137 to a greater extent can also reduce the space occupied by the current collecting components 211 in the height direction in the top cap assemblies 21 on both ends. With the same height of the battery cell 20, more space can be freed on both ends for the positive electrode plate and the negative electrode plate respectively, thereby further increasing the energy density of the battery cell 20.

According to some embodiments of this application, optionally, referring to FIG. 4 and FIG. 5, the top cap assembly 21 includes a current collecting component 211, a top cap sheet 212, a first insulation piece 213, a second insulation piece 214, a connecting piece 215, and an electrode terminal 216. Specifically, referring to FIG. 5 to FIG. 8, the top cap sheet 212 includes a first side and a second side oriented away from each other. The first insulation piece 213 is mounted on the first side of the top cap sheet 212. The second insulation piece 214 is mounted on the second side of the top cap sheet 212. The connecting piece 215 is mounted on one side of the first insulation piece 213, the side being oriented away from the top cap sheet 212. The current collecting component 211 is mounted on one side of the second insulation piece 214, the side being oriented away from the top cap sheet 212. The electrode terminal 216 passes through and is inserted in the first connecting section 21131 of the current collecting component 211, the second insulation piece 214, the top cap sheet 212, the first insulation piece 213, and the connecting piece 215. The two opposite ends of the electrode terminal 216 are connected to the connecting piece 215 and the first connecting section 21131 of the current collecting component 211 respectively.

Referring to FIG. 3 and FIG. 4 together, the top cap sheet 212 is a component that fits and covers the opening of the shell 23 to isolate the internal environment of the battery cell 20 from the external environment. Without limitation, the shape of the top cap sheet 212 may be adapted to the shape of the opening of the shell 23 to fit the shell 23. Optionally, the top cap sheet 212 may be made of a material of appropriate hardness and strength (such as aluminum alloy), so that the top cap sheet 212 is not prone to deform when squeezed or impacted. In this way, the battery cell 20 achieves higher structural strength and higher safety performance. The first side of the top cap sheet 212 is a side oriented away from the interior of the shell 23, and the second side of the top cap sheet 212 is a side oriented toward the interior of the shell 23.

Referring to FIG. 5, the connecting piece 215 is a component configured to be riveted to one end of the electrode terminal 216 on the top cap sheet 212. The connecting piece 215 may be made of aluminum. The first insulation piece 213 and the second insulation piece 214 are components disposed on the top cap sheet 212 to play an electrical insulation role. Both the first insulation piece 213 and the second insulation piece 214 are made of an insulation material such as plastic and rubber. The first insulation piece 213 is located on the first side of the top cap sheet 212, and is configured to carry the connecting piece 215 and implement electrical insulation between the connecting piece 215 and the top cap sheet 212. The second insulation piece 214 is located on the second side of the top cap sheet 212, and is configured to accommodate the current collecting component 211 and implement electrical insulation between the current collecting component 211 and the top cap sheet 212. The first insulation piece 213 and the second insulation piece 214 can reduce the risk of short circuits.

Referring to FIG. 7 and FIG. 8, the two opposite ends of the electrode terminal 216 are connected to the connecting piece 215 and the first connecting section 21131 of the current collecting component 211 respectively. The second connecting section 21133 of the current collecting component 211 is connected to the tab 251 of the electrode assembly 25 by the tab connecting portion 2111, so as to conduct the current of the electrode assembly 25 to the connecting piece 215 on the first side through the tab 251, the current collecting component 211, and the electrode terminal 216 in sequence. The first insulation piece 213 and the second insulation piece 214 are disposed on two sides, oriented away from each other, of the top cap sheet 212, so as to insulate the top cap sheet 212 and reduce the risk of short circuits.

According to some embodiments of this application, optionally, referring to FIG. 5 and FIG. 7, the top cap assembly 21 further includes a sealing element 217. The sealing element 217 is sleeved on the electrode terminal 216 and located between the top cap sheet 212 and the electrode terminal 216, and is configured to seal the clearance between the top cap sheet 212 and the electrode terminal 216.

The sealing element 217 is a functional component configured to play a sealing role to prevent the electrolyte solution in the battery 100 from leaking out. The material of the sealing element 217 may be an elastic material such as rubber or plastic. The shape of the sealing element 217 may be a circular ring, a square ring, or the like, as long as the shape of the sealing element matches the shape of the outer peripheral wall of the electrode terminal 216 and is able to fill the clearance between the top cap sheet 212 and the electrode terminal 216. The sealing element 217 is located between the electrode terminal 216 and the top cap sheet 212 to fill the clearance, thereby preventing the electrolyte solution inside the battery cell 20 from leaking out.

According to some embodiments of this application, optionally, referring to FIG. 13, any two adjacent riveting sub-portions 21151 are welded to each other. To be specific, each riveting position between the terminal connecting sub-portions 21137 is reinforced by welding. On the one hand, the welding reinforcement increases the connection strength between the terminal connecting sub-portions 21137. On the other hand, the welding reinforcement increases the flow area of the current collecting component 211, reduces the internal resistance, reduces the temperature rise, and improves the safety performance of the battery cell 20.

According to some embodiments of this application, optionally, referring to FIG. 10 to FIG. 13, the terminal connecting portion 2113 is provided with a fixing structure 2115. In the fixing structure 2115, all the riveting sub-portions 21151 are stacked in sequence and mated to each other. In other words, a plurality of riveting sub-portions 21151 are stacked up to form a fixing structure 2115.

The fixing structure 2115 is a structure configured to position and fix two parts to be connected when the two parts need to be connected together. The riveting sub-portion 21151 is also a structure configured to position and fix two parts to be connected when the two parts need to be connected together. The plurality of riveting sub-portions 21151 mate with each other to position and fixedly connect the two parts to be connected, that is, to position and fixedly connect the two adjacent terminal connecting sub-portions 21137.

In contrast to a practice in which a plurality of single-layer terminal connecting sub-portions are punched out and then stacked up and welded together to form a terminal connecting portion, in these embodiments of this application, the riveting sub-portions 21151 of the terminal connecting sub-portions 21137 on adjacent layers are stacked to form a fixing structure 2115, so as to be positioned accurately and easy to align. In addition, no welding process is required, thereby improving the production efficiency of the current collecting component 211. In contrast to a practice in which a multilayered terminal connecting portion is obtained by rolling a material into a plurality of layers and then cutting the rolled layers, in these embodiments of this application, the riveting of the riveting sub-portions 21151 of the terminal connecting sub-portions 21137 on adjacent layers can reduce burrs.

According to some embodiments of this application, optionally, referring to FIG. 5, FIG. 13, and FIG. 15, the fixing structure 2115 is disposed at an end region, close to the electrode terminal 216, of the terminal connecting portion 2113. In other words, the fixing structure 2115 is disposed at the first connecting section 21131 of the terminal connecting portion 2113. In this way, all the terminal connecting sub-portions 21137 can be riveted together to form a one-piece terminal connecting portion 2113.

According to some embodiments of this application, optionally, referring to FIG. 5 and FIG. 13, the fixing structure 2115 is disposed at an end region, close to the tab connecting portion 2111, of the terminal connecting portion 2113. In other words, the fixing structure 2115 is disposed at the second connecting section 21133 of the terminal connecting portion 2113. In this way, after all the terminal connecting sub-portions 21137 are riveted together to form a one-piece terminal connecting portion 2113, the one-piece terminal connecting portion 2113 can be conveniently riveted to the tab connecting portion 2111.

According to some embodiments of this application, optionally, referring to FIG. 5 and FIG. 13, the fixing structure 2115 is disposed at an end region, close to the electrode terminal 216, of the terminal connecting portion 2113 and at an end region, close to the tab connecting portion 2111, of the terminal connecting portion 2113. In other words, the fixing structure 2115 is disposed at the first connecting section 21131 of the terminal connecting portion 2113, and the fixing structure 2115 is also disposed at the second connecting section 21133 of the terminal connecting portion 2113. In this way, on the one hand, all the terminal connecting sub-portions 21137 can be riveted together to form a one-piece terminal connecting portion 2113. On the other hand, after all the terminal connecting sub-portions 21137 are riveted together to form a one-piece terminal connecting portion 2113, the one-piece terminal connecting portion 2113 can be conveniently riveted to the tab connecting portion 2111. Moreover, a fixing structure 2115 is disposed on both opposite ends of the terminal connecting portion 2113, so that the bonding force of the two ends of the one-piece terminal connecting portion 2113 is relatively uniform, and the bonding is firmer on the whole.

According to some embodiments of this application, optionally, referring to FIG. 11, FIG. 15, and FIG. 16, the number of the fixing structures 2115 is one or more.

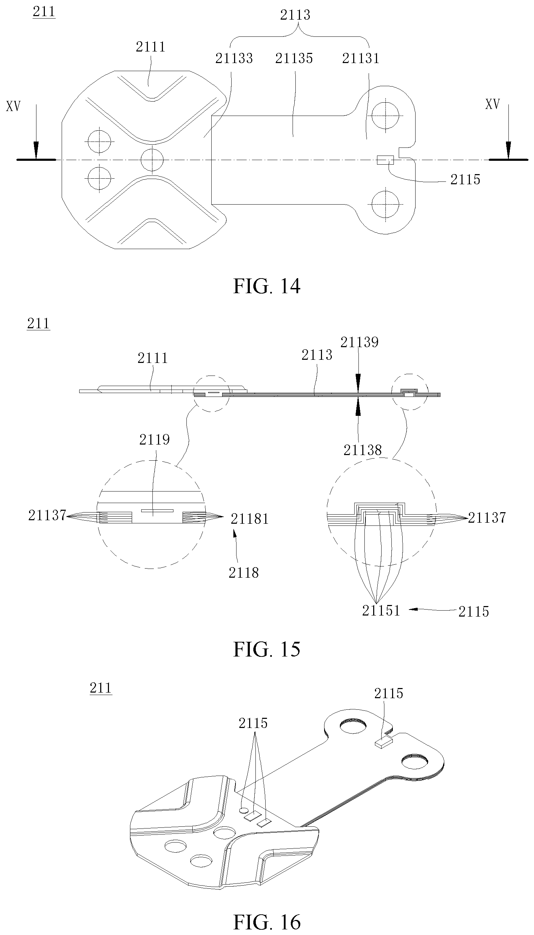

Referring to FIG. 14 and FIG. 15, when the number of the fixing structures 2115 is one, the one fixing structure 2115 may be disposed at the first connecting section 21131 of the terminal connecting portion 2113 (as shown in FIG. 15), or at the second connecting section 21133 of the terminal connecting portion 2113, or at the bent section 21135 of the terminal connecting portion 2113, without being limited herein. No matter where the one fixing structure 2115 is disposed at the terminal connecting portion 2113, a high positioning precision can be ensured when the terminal connecting sub-portions 21137 on any adjacent layers are riveted together.

Referring to FIG. 11 and FIG. 16, when the number of the fixing structures 2115 is plural, the plurality of fixing structures 2115 may be all disposed at the first connecting section 21131 of the terminal connecting portion 2113, or all disposed at the second connecting section 21133 of the terminal connecting portion 2113, or all disposed at the bent section 21135 of the terminal connecting portion 2113. Alternatively, a part of the plurality of fixing structures 2115 is disposed at the first connecting section 21131 of the terminal connecting portion 2113, and the rest is disposed at the second connecting section 21133 of the terminal connecting portion 2113, as shown in FIG. 11 and FIG. 16. Alternatively, a part of the plurality of fixing structures 2115 is disposed at the first connecting section 21131 of the terminal connecting portion 2113, and the rest is disposed at the bent section 21135 of the terminal connecting portion 2113. Alternatively, a part of the plurality of fixing structures 2115 is disposed at the second connecting section 21133 of the terminal connecting portion 2113, and the rest is disposed at the bent section 21135 of the terminal connecting portion 2113. Alternatively, a part of the plurality of fixing structures 2115 is disposed at the first connecting section 21131 of the terminal connecting portion 2113, another part is disposed at the second connecting section 21133 of the terminal connecting portion 2113, and still another part is disposed at the bent section 21135 of the terminal connecting portion 2113. No matter where the plurality of fixing structures 2115 are disposed at the terminal connecting portion 2113, not only a high positioning precision is ensured during riveting of the terminal connecting sub-portions 21137 on any adjacent layers, but also the connection strength between the terminal connecting sub-portions 21137 is improved, thereby preventing easy detachment from each other, and improving the operating stability of the current collecting component 211.

According to some embodiments of this application, optionally, referring to FIG. 11, a cross-sectional shape of the fixing structure 2115 is any one of a square, a rectangle, or a circle.

Referring to FIG. 11, FIG. 13, and FIG. 15, the cross-section of the fixing structure 2115 is the cross-section of the riveting sub-portion 21151, and is also a plane obtained by sectioning the riveting sub-portion 21151 by a plane parallel to the upper surface of the terminal connecting sub-portion 21137. The cross-sectional shape of the fixing structure 2115 is not limited, and may be any one of a square, a rectangle, a circle, or another polygon, thereby reducing the design difficulty of the terminal connecting portion 2113, and simplifying the manufacture of the current collecting component 211.

According to some embodiments of this application, optionally, referring to FIG. 11 and FIG. 16, when the number of the fixing structures 2115 is plural, a part of the plurality of fixing structures 2115 are disposed at the first connecting section 21131 of the terminal connecting portion 2113, and the rest is disposed at the second connecting section 21133 of the terminal connecting portion 2113, the cross-sectional shapes of the plurality of fixing structures 2115 may be the same or different.

Referring to FIG. 11 to FIG. 13, in an example, the cross-sectional shapes of the plurality of fixing structures 2115 are the same. Specifically, the cross-sectional shape of the fixing structure 2115 on the first connecting section 21131 of the terminal connecting portion 2113 is rectangular, and the cross-sectional shape of the fixing structure 2115 on the second connecting section 21133 of the terminal connecting portion 2113 is also rectangular. The cross-sectional shapes of the plurality of fixing structures 2115 are designed to be the same, thereby simplifying the manufacture process of the terminal connecting portion 2113.

Referring to FIG. 16, in another example, the cross-sectional shapes of the plurality of fixing structures 2115 are at least partially different. Specifically, the cross-sectional shape of the fixing structure 2115 on the first connecting section 21131 of the terminal connecting portion 2113 is rectangular, the cross-sectional shape of the fixing structure 2115 on the second connecting section 21133 of the terminal connecting portion 2113 is rectangular, and the cross-sectional shape of the fixing structure on another part of the terminal connecting portion is circular. The cross-sectional shapes of the plurality of fixing structures 2115 are designed to be different, thereby making it easier to position the parts during riveting, avoiding misalignment during riveting, and being foolproof.

According to some embodiments of this application, optionally, referring to FIG. 13 and FIG. 15, the terminal connecting portion 2113 includes a first main surface 21138 and a second main surface 21139 arranged opposite to each other along a thickness direction of the terminal connecting portion after being spread out. The fixing structure 2115 forms a recessed portion on a side at which the first main surface 21138 is located, and the fixing structure 2115 forms a first protruding portion on the second main surface 21139.

The first main surface 21138 is a region other than the recessed portion on a surface of the terminal connecting portion 2113, the surface being oriented away from the tab connecting portion 2111. The second main surface 21139 is a region other than the first protruding portion on a surface of the terminal connecting portion 2113, the surface being oriented toward the tab connecting portion 2111.

In an example, the first protruding portion is a structure that protrudes out relative to the second main surface 21139 and that is formed by punching the terminal connecting portion 2113 of a flat sheet structure. Correspondingly, the recessed portion is a spatial structure that is recessed relative to the first main surface 21138 and that is formed by punching the terminal connecting portion 2113 of a flat sheet structure, as shown in FIG. 13 and FIG. 15. In another example, the recessed portion is still a spatial structure that is recessed relative to the first main surface 21138 and that is formed by punching the terminal connecting portion 2113 of a flat sheet structure. However, the first protruding portion does not protrude out relative to the second main surface 21139, but is flush with the second main surface 21139, and the first protruding portion is merely defined relative to the recessed portion.

The fixing structure 2115 includes a first protruding portion and a recessed portion, so that misalignment between layers can be avoided during stacking when the terminal connecting portion 2113 is formed by riveting, so as to implement accurate positioning and easy alignment. In addition, no welding process is required, thereby improving the production efficiency of the current collecting component 211. In addition, the fixing structure 2113 includes a first protruding portion and a recessed portion, thereby reducing burrs.

According to some embodiments of this application, optionally, referring to FIG. 12 and FIG. 13, the tab connecting portion 2111 is disposed on one side of the terminal connecting portion 2113, the side being close to the second main surface 21139. The tab connecting portion 2111 is provided with a first accommodation portion 2117. The first protruding portion of the fixing structure 2115 is accommodated in the first accommodation portion 2117. The first protruding portion of the fixing structure 2115 is accommodated in the first accommodation portion 2117, and can play a positioning role when the terminal connecting portion 2113 is connected to the tab connecting portion 2111.

The first accommodation portion 2117 may be a through-hole or a groove. The position of the first accommodation portion 2117 corresponds to the position of the fixing structure 2115 on the second connecting section 21133. The number of the first accommodation portions 2117 corresponds to the number of the fixing structures 2115 on the second connecting section 21133. Specifically, when the number of the fixing structures 2115 on the second connecting section 21133 is one, the number of the first accommodation portions 2117 is also one; when the number of the fixing structures 2115 on the second connecting section 21133 is plural, the number of the first accommodation portions 2117 is also plural.

The cross-sectional shape of the fixing structure 2115 is not limited, and may be any one of a square, a rectangle, or a circle. Correspondingly, the cross-sectional shape of the first accommodation portion 2117 is also not limited, and may any one of a square, a rectangle, or a circle, as long as the cross-sectional shape of the fixing structure 2115 matches the cross-sectional shape of the corresponding first accommodation portion 2117. This arrangement reduces the design difficulty of the tab connecting portion 2111, and further simplifies the manufacture of the current collecting component 211.

According to some embodiments of this application, optionally, referring to FIG. 12 and FIG. 13, the terminal connecting portion 2113 is fixedly connected to the tab connecting portion 2111 by the first protruding portion.

In this case, the first accommodation portion 2117 is also a structure configured to position and fix two parts to be connected when the two parts need to be connected together. The fixing structure 2115 mates with the first accommodation portion 2117 to position and/or fix the two parts to be connected, that is, to position and/or fix the tab connecting portion 2111 and the terminal connecting portion 2113. When the first protrusion of the fixing structure 2115 is fixedly connected (riveted) to the first accommodation portion 2117, the terminal connecting portion 2113 can be connected to the tab connecting portion 2111 by riveting. In contrast to a practice in which the terminal connecting portion 2113 is connected to the tab connecting portion 2111 by a welding process, the design in this application improves the positioning precision when the terminal connecting portion 2113 is connected to the tab connecting portion 2111, and avoids the welding process, thereby improving the production efficiency of the current collecting component 211.

In addition, the number of the first accommodation portions 2117 may be greater than the number of the fixing structures 2115 on the second connecting section 21133. On the one hand, if one of the first accommodation portions 2117 fails, the fixing structure 2115 may be riveted to the remaining first accommodation portions 2117. On the other hand, considering the mounting of other parts in the battery cell 20, the terminal connecting portion 2113 and the tab connecting portion 2111 may need to be staggered in the width direction to facilitate the mounting. In this case, riveting the fixing structure 2115 to the remaining first accommodation portions 2117 enables the staggered mounting of the terminal connecting portion 2113 and the tab connecting portion 2111 in the width direction, thereby facilitating the mounting of other parts in the battery cell 20.

According to some embodiments of this application, referring to FIG. 13, in some embodiments, each riveting sub-portion 21151 includes a sub-protrusion and a sub-recess. Each sub-protrusion protrudes toward the second main surface 21139. Each sub-recess is recessed from the first main surface 21138 toward the second main surface 21139. The sub-protrusion of one riveting sub-portion 21151 among two adjacent riveting sub-portions 21151 is accommodated in and fixedly connected to the sub-recess of the other riveting sub-portion 21151.

The riveting between the sub-protrusion of one terminal connecting sub-portion among terminal connecting sub-portions 21137 on adjacent layers and the sub-recess of the other terminal connecting sub-portion may be implemented by a stamping process. For example, the terminal connecting sub-portion 21137 on a second layer is stacked on the terminal connecting sub-portion 21137 on a first layer, and the stacked structure is stamped toward a region at which a fixing structure 2115 is to be formed, thereby riveting the terminal connecting sub-portion 21137 on the second layer to the terminal connecting sub-portion 21137 on the first layer, and forming a sub-protrusion and a sub-recess on both the terminal connecting sub-portion 21137 on the first layer and the terminal connecting sub-portion 21137 on the second layer. Subsequently, the terminal connecting sub-portion 21137 on a third layer is stacked on the terminal connecting sub-portion 21137 on the second layer, and the stacked structure is stamped toward the sub-recess of the terminal connecting sub-portion 21137 on the second layer, thereby riveting the terminal connecting sub-portion 21137 on the third layer to the terminal connecting sub-portion 21137 on the second layer, and forming a sub-protrusion and a sub-recess on the terminal connecting sub-portion 21137 on the third layer. Subsequently, the terminal connecting sub-portion 21137 on a fourth layer is stacked on the terminal connecting sub-portion 21137 on the third layer, and the stacked structure is stamped toward the sub-recess of the terminal connecting sub-portion 21137 on the third layer, thereby riveting the terminal connecting sub-portion 21137 on the fourth layer to the terminal connecting sub-portion 21137 on the third layer, and forming a sub-protrusion and a sub-recess on the terminal connecting sub-portion 21137 on the fourth layer. By stacking and riveting the terminal connecting sub-portions in this way, the terminal connecting sub-portions 21137 on all layers can be riveted together to form a whole terminal connecting portion 2113.

In contrast to a practice in which a plurality of single-layer terminal connecting sub-portions are punched out and then stacked up and welded together to form a terminal connecting portion, in these embodiments of this application, the sub-protrusion of one of two adjacent terminal connecting sub-portions 21137 is riveted to the sub-recess of the other terminal connecting sub-portion, thereby avoiding misalignment between layers during stacking, implementing accurate positioning and easy alignment. In addition, no welding process is required, thereby improving the production efficiency of the current collecting component 211. In contrast to a practice in which a multilayered terminal connecting portion is obtained by rolling a material into a plurality of layers and then cutting the rolled layers, the riveting between the sub-protrusion of one of two adjacent terminal connecting sub-portions 21137 and the sub-recess of the other terminal connecting sub-portion can reduce burrs.

According to some embodiments of this application, optionally, referring to FIG. 12 to FIG. 15, the riveting between the adjacent terminal connecting sub-portions 21137, and the riveting between the sub-protrusion of the outermost terminal connecting sub-portion 21137 and the accommodation portion 2117, may be performed in a progressive die.

The progressive die is a cold-stamping die in which a plurality of stamping operations on a strip-shaped raw material are simultaneously completed at different stations within a single die during one stroke of the press. Upon completion of each stroke of the press, the strip of material advances by a fixed distance until the product is fully formed. Specifically, it is assumed that the terminal connecting portion 2113 includes terminal connecting sub-portions 21137 on three layers, there are two stations on the die, and each station corresponds to one current collecting component 211. In a case that the sub-protrusion of the outermost terminal connecting sub-portion 21137 is riveted to the accommodation portion 2117 on the tab connecting portion 2111 before the sub-protrusion of one of two adjacent terminal connecting sub-portions 21137 is riveted to the sub-recess of the other terminal connecting sub-portion, the following steps are performed simultaneously at two stations: the press stamps the material strips corresponding to the two stations for a first stroke, and the material strips are blanked at the same time. This terminal connecting sub-portion 21137 serves as a first terminal connecting sub-portion 21137, that is, a first layer (outermost layer). The first terminal connecting sub-portion 21137 is stamped, so that the sub-protrusion on the first terminal connecting sub-portion is riveted to the accommodation portion 2117 (a groove or through-hole) on the connection region 21111 of the tab connecting portion 2111 pre-placed in the die, and a sub-recess is formed on the first main surface 21138 side of the first terminal connecting sub-portion 21137. Subsequently, the material strip is moved stepwise by a fixed distance until new material strips move to the region in alignment with the two stations, and then the press stamps the material strips for a second stroke, and the material strips are blanked simultaneously again. At this time, the terminal connecting sub-portion 21137 serves as a second terminal connecting sub-portion 21137. The second terminal connecting sub-portion 21137 is stamped, so that the sub-protrusion on the second terminal connecting sub-portion is stamped from the sub-recess on the first terminal connecting sub-portion 21137 into the first terminal connecting sub-portion 21137 to form a rivet connection, and a sub-recess is formed on the first main surface 21138 side of the second terminal connecting sub-portion 21137. Finally, the material strips are moved stepwise again by a fixed distance until new material strips move to the region in alignment with the two stations, and then the press stamps the material strips for a third stroke, and the material strips are blanked simultaneously again. At this time, the terminal connecting sub-portion 21137 serves as a third terminal connecting sub-portion 21137. The third terminal connecting sub-portion 21137 is stamped, so that the sub-protrusion on the third terminal connecting sub-portion is stamped from the sub-recess on the second terminal connecting sub-portion 21137 into the second terminal connecting sub-portion 21137 to form a rivet connection, and a sub-recess is formed on the first main surface 21138 side of the third terminal connecting sub-portion 21137, thereby simultaneously implementing the connection between the terminal connecting portion 2113 of each of the two current collecting components 211 on the two stations and the tab connecting portion 2111 as well as the riveting between the terminal connecting sub-portions 21137 on adjacent layers.

The riveting between the adjacent terminal connecting sub-portions 21137 and the riveting between the outermost terminal connecting sub-portion 21137 and the tab connecting portion 2111 are performed in the progressive die. The progressive die can implement overlap riveting automatically, thereby improving the positioning precision of the current collecting component 211 and implementing mass production, and in turn, improving the production efficiency of the current collecting component 211.

According to some embodiments of this application, optionally, referring to FIG. 12 to FIG. 15, the sub-protrusion of one of two adjacent terminal connecting sub-portions 21137 is in interference fit with the sub-recess of the other terminal connecting sub-portion, and the sub-protrusion of the outermost terminal connecting sub-portion 21137 is in interference fit with the accommodation portion 2117.

The sub-protrusion of the outermost terminal connecting sub-portion 21137 may be riveted to the accommodation portion 2117 by a stamping process. After being stamped, the sub-protrusion of the outermost terminal connecting sub-portion 21137 is in interference fit with the accommodation portion 2117. The interference fit makes the connection firmer between the terminal connecting portion 2113 and the tab connecting portion 2111, and prevents easy detachment from each other, thereby improving the operating stability of the current collecting component 211. The sub-protrusion of one of two terminal connecting sub-portions 21137 may be riveted to the sub-recess of the other terminal connecting sub-portion also by a stamping process. After being stamped, the sub-protrusion of one of two terminal connecting sub-portions 21137 is in interference fit with the sub-recess of the other terminal connecting sub-portion. The interference fit makes the connection firmer between the plurality of terminal connecting sub-portions 21137.

According to some embodiments of this application, optionally, referring to FIG. 14 and FIG. 15, the terminal connecting portion is provided with a second accommodation portion 2118, and the tab connecting portion is provided with a second protruding portion 2119. The second protruding portion 2119 is accommodated in the second accommodation portion 2118.

In a case that the fixing structure 2115 is disposed at an end region (the first connecting section 21131), close to the electrode terminal 216, of the terminal connecting portion 2113, a second accommodation portion 2118 may be further created at the end region (the second connecting section 21133), close to the tab connecting portion 2111, of the terminal connecting portion 2113. In this case, the second protruding portion 2119 is accommodated in the cavity 2118, thereby improving the positioning precision when the terminal connecting portion 2113 is connected to the tab connecting portion 2111.

Specifically, in an example, an accommodation sub-portion 21181 is created at the terminal connecting sub-portion 21137 on each layer. A plurality of accommodation sub-portions 21181 are aligned with each other and communicate with each other to jointly form the second accommodation portion 2118. The second protruding portion 2119 may be accommodated in the second accommodation portion 2118. The second accommodation portion 2118 may be a through-hole that runs through the first main surface 21138 and the second main surface 21139, or a groove that runs through the second main surface 21139 but without running through the first main surface 21138. The second protruding portion 2119 is accommodated in the second accommodation portion 2118, thereby improving the positioning precision when the terminal connecting portion 2113 is connected to the tab connecting portion 2111, and in turn, improving the production efficiency of the current collecting component 211. In another example, the accommodation sub-portions 21181 are created at a part of the terminal connecting sub-portions 21137, and these accommodation sub-portions 21181 are aligned with each other and communicate with each other to jointly form the second accommodation portion 2118 while the accommodation sub-portion 21181 is not necessarily created at other terminal connecting sub-portions 21137. In this case, the second accommodation portion 2118 is a groove that runs through the second main surface 21139 but without running through the first main surface 21138. Similarly, the second protruding portion 2119 may also be accommodated in the second accommodation portion 2118 that is in the form of a groove.

According to some embodiments of this application, optionally, referring to FIG. 14 and FIG. 15, the tab connecting portion 2111 is fixedly connected to the terminal connecting portion 2113 by the second protruding portion 2119.

Specifically, in an example, an accommodation sub-portion 21181 is created at the terminal connecting sub-portion 21137 on each layer. A plurality of accommodation sub-portions 21181 are aligned with each other and communicate with each other to jointly form the second accommodation portion 2118. The second protruding portion 2119 may be in interference fit into (fixedly connected to) the second accommodation portion 2118. The second accommodation portion 2118 may be a through-hole that runs through the first main surface 21138 and the second main surface 21139, or a groove that runs through the second main surface 21139 but without running through the first main surface 21138. The second protruding portion 2119 is directly riveted to the second accommodation portion 2118, thereby improving the positioning precision when the terminal connecting portion 2113 is riveted to the tab connecting portion 2111, eliminating the need of a welding process, and in turn, improving the production efficiency of the current collecting component 211. In another example, the accommodation sub-portions 21181 are created at a part of the terminal connecting sub-portions 21137, and these accommodation sub-portions 21181 are aligned with each other and communicate with each other to jointly form the second accommodation portion 2118 while the accommodation sub-portion 21181 is not created at other terminal connecting sub-portions 21137. In this case, the second accommodation portion 2118 is a groove that runs through the second main surface 21139 but without running through the first main surface 21138. Similarly, the second protruding portion 2119 may also be directly riveted to the second accommodation portion 2118.

According to some embodiments of this application, optionally, referring to FIG. 10, the terminal connecting portion 2113 and the tab connecting portion 2111 are at least partially welded together.

The second connecting section 21133 is welded to the connection region 21111 of the tab connecting portion 2111. In an example, a weld mark formed between the terminal connecting portion 2113 and the tab connecting portion 2111 is located in a region outside the fixing structure 2115. The second connecting section 21133 is welded to the region outside the fixing structure 2115 on the connection region 21111. That is, the welding is implemented at a non-rivet position between the terminal connecting portion 2113 and the tab connecting portion 2111 for reinforcement. On the one hand, the welding increases the flow area of the current collecting component 211, reduces the internal resistance, reduces the temperature rise, and improves the safety performance of the battery cell 20 (as shown in FIG. 3). On the other hand, the welding makes the connection firmer between the terminal connecting portion 2113 and the tab connecting portion 2111, thereby preventing easy detachment between the two portions, and improving the operating stability of the current collecting component 211.

In another example, the weld mark formed between the terminal connecting portion 2113 and the tab connecting portion 2111 may be located in a region at which the fixing structure 2115 is located. The second connecting section 21133 is welded to the region at which the fixing structure 2115 is located on the connection region 21111, that is, the welding is implemented at a rivet position between the terminal connecting portion 2113 and the tab connecting portion 2111 for reinforcement. On the one hand, the welding increases the flow area of the current collecting component 211, reduces the internal resistance, reduces the temperature rise, and improves the safety performance of the battery cell 20 (as shown in FIG. 3). On the other hand, the welding makes the connection firmer between the terminal connecting portion 2113 and the tab connecting portion 2111, thereby preventing easy detachment between the two portions, and improving the operating stability of the current collecting component 211.

According to some embodiments of this application, optionally, referring to FIG. 10, the second connecting section 21133 is welded to the connection region 21111 of the tab connecting portion 2111 by at least one of ultrasonic welding, molecular diffusion welding, or laser welding.

The ultrasonic welding is described below: The current is converted into high-frequency electrical energy by an ultrasonic generator, and then the high-frequency electrical energy is converted into mechanical motion through a transducer. Finally, the mechanical motion is transmitted to a welding head through a booster. The welding head transmits the received vibration energy to an interface between the second connecting section 21133 and the tab connecting portion 2111. The vibration energy is converted into heat energy by friction. The heat energy is concentrated at the interface between the second connecting section 21133 and the tab connecting portion 2111 to melt the interface quickly. After a specified pressure is applied, the interface between the second connecting section 21133 and the tab connecting portion 2111 is fused into one. By means of the ultrasonic welding, the tab connecting portion 2111 and the terminal connecting portion 2113 can be compacted by applying a pressure, thereby preventing cold solder joints, and ensuring the firmness of the weld between the tab connecting portion 2111 and the terminal connecting portion 2113. In addition, the ultrasonic welding can implement metal bonding between the tab connecting portion 2111 and the terminal connecting portion 2113 in a short time and at low temperature.

The molecular diffusion welding is a welding method by which the molecules at the interface between the tab connecting portion 2111 and the terminal connecting portion 2113 are diffused at a specified high temperature and under a specified pressure to form a joint. By means of the molecular diffusion welding, if the connection region 21111 of the tab connecting portion 2111 and the second connecting section 21133 of the terminal connecting portion 2113 are made of the same material, then no heat-affected zone is generated at the weld joint, and therefore, no residual stress exists, and no melting defect occurs. In addition, in the molecular diffusion welding, the welding temperature is low, little damage is caused to the tab connecting portion 2111 and the terminal connecting portion 2113, the welding precision is high, and the resultant deformation is small.

The laser welding is a method of welding by using heat generated by a focused laser beam that is used as energy to bombard the interface between the tab connecting portion 2111 and the terminal connecting portion 2113. The laser welding ensures the firmness of the weld between the tab connecting portion 2111 and the terminal connecting portion 2113. In addition, the laser welding is fast in speed, and can implement a great weld depth and control a small deformation at the weld between the tab connecting portion 2111 and the terminal connecting portion 2113.

According to some embodiments of this application, optionally, referring to FIG. 3, FIG. 8, and FIG. 10, the terminal connecting portion 2113 is disposed between the tab connecting portion 2111 and the electrode terminal 216 in a bent manner. The terminal connecting portion 2113 is disposed between the tab connecting portion 2111 and the electrode terminal 216 in a bent manner, thereby reducing the space occupied by the current collecting component 211 in the height direction in the battery cell 20. On the one hand, this arrangement makes the structure of the battery cell 20 more compact. On the other hand, with the same height of the battery cell 20, more space can be freed for the electrode plate in the electrode assembly 25, thereby increasing the energy density of the battery cell 20.

According to a second aspect, referring to FIG. 2, this application further provides a battery 100. The battery includes the battery cell 20 disclosed in any one of the above embodiments.

In the technical solution of an embodiment of this application, referring to FIG. 3 and FIG. 10, the battery 100 employs the battery cell 20 according to an embodiment of the first aspect. In the top cap assembly 21 of the battery cell 20, the terminal connecting sub-portions 21137 stacked in layers of the current collecting component 211 are more bendable and not easily breakable, thereby ensuring the operating stability of the battery 100. In addition, with the same bendability, the aggregate thickness of the plurality of terminal connecting sub-portions 21137 can be made larger, thereby increasing the flow area of the current collecting component 211, reducing the internal resistance, and reducing the temperature rise, and in turn, improving the safety of the battery 100. In addition, bending the plurality of terminal connecting sub-portions 21137 to a greater extent can also reduce the space occupied by the current collecting component 211 in the height direction, increase the energy density of the battery cell 20, and in turn, increase the energy density of the battery 100.

According to a third aspect, referring to FIG. 1, this application further provides an electrical device. The electrical device includes the battery 100 disclosed in any one of the above embodiments. The battery 100 is configured to provide electrical energy.

In the technical solution of an embodiment of this application, referring to FIG. 3 and FIG. 10, the electrical device employs the battery 100 according to an embodiment of the second aspect. In the battery cell 20 of the battery 100, the terminal connecting sub-portions 21137 stacked in layers of the current collecting component 211 in the top cap assembly 21 are more bendable and not easily breakable, thereby ensuring the operating stability of the electrical device. In addition, with the same bendability, the aggregate thickness of the plurality of terminal connecting sub-portions 21137 can be made larger, thereby increasing the flow area of the current collecting component 211, reducing the internal resistance, and reducing the temperature rise, and in turn, improving the safety of the battery 100. In addition, bending the plurality of terminal connecting sub-portions 21137 to a greater extent can also reduce the space occupied by the current collecting component 211 in the height direction, increase the energy density of the battery cell 20, and in turn, increase the energy density of the battery 100, and improve the runtime of the electrical device.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, **characterized in that** the battery cell comprises:
an electrode assembly, comprising a tab;
a shell, configured to accommodate the electrode assembly;
an electrode terminal, disposed on the shell; and
a current collecting component, comprising a tab connecting portion and a terminal connecting portion, wherein the tab connecting portion is configured to be connected to the tab, the terminal connecting portion is configured to be connected to the electrode terminal, the terminal connecting portion comprises a plurality of terminal connecting sub-portions stacked in layers, each terminal connecting sub-portion comprises a riveting sub-portion, and any two adjacent riveting sub-portions are fixed together by riveting.

2. The battery cell according to claim 1, **characterized in that** any two adjacent riveting sub-portions are welded to each other.

3. The battery cell according to claim 1 or 2, **characterized in that** the terminal connecting portion is provided with a fixing structure; and, in the fixing structure, all the riveting sub-portions are stacked in sequence and mated to each other.

4. The battery cell according to claim 3, **characterized in that** the fixing structure is disposed at an end region, close to the electrode terminal, of the terminal connecting portion, and/or at an end region, close to the tab connecting portion, of the terminal connecting portion.

5. The battery cell according to claim 3 or 4, **characterized in that** a number of the fixing structures is one or more.

6. The battery cell according to any one of claims 3 to 5, **characterized in that** the terminal connecting portion comprises a first main surface and a second main surface arranged opposite to each other along a thickness direction of the terminal connecting portion after being spread out, the fixing structure forms a recessed portion on a side at which the first main surface is located, and the fixing structure forms a first protruding portion on the second main surface.

7. The battery cell according to claim 6, **characterized in that** the tab connecting portion is disposed on one side, close to the second main surface, of the terminal connecting portion, the tab connecting portion is provided with a first accommodation portion, and the first protruding portion is accommodated in the first accommodation portion.

8. The battery cell according to claim 7, **characterized in that** the terminal connecting portion is fixedly connected to the tab connecting portion by the first protruding portion.

9. The battery cell according to claim 7 or 8, **characterized in that** each riveting sub-portion comprises a sub-protrusion and a sub-recess, each sub-protrusion protrudes toward the second main surface, each sub-recess is recessed from the first main surface toward the second main surface, and the sub-protrusion of one riveting sub-portion among two adjacent riveting sub-portions is accommodated in and fixedly connected to the sub-recess of the other riveting sub-portion.

10. The battery cell according to any one of claims 1 to 9, **characterized in that** the terminal connecting portion is provided with a second accommodation portion, and the tab connecting portion is provided with a second protruding portion, and the second protruding portion is accommodated in the second accommodation portion.

11. The battery cell according to claim 10, **characterized in that** the tab connecting portion is fixedly connected to the terminal connecting portion by the second protruding portion.

12. The battery cell according to any one of claims 1 to 11, **characterized in that** the terminal connecting portion and the tab connecting portion are at least partially welded together.

13. The battery cell according to claim 12, **characterized in that** a weld mark formed between the terminal connecting portion and the tab connecting portion is located in a region outside the fixing structure.

14. The battery cell according to any one of claims 1 to 13, **characterized in that** the terminal connecting portion is disposed between the tab connecting portion and the electrode terminal in a bent manner.

15. A battery, **characterized in that** the battery comprises the battery cell according to any one of claims 1 to 14.

16. An electrical device, **characterized in that** the electrical device comprises the battery according to claim 15, and the battery is configured to provide electrical energy.
